# EUROPEAN PATENT SPECIFICATION

(11) **EP 4 119 618 B1**
(45) Date of publication and mention of the grant of the patent: **25.03.2026**
(21) Application number: 20924088.6
(22) Date of filing: 11.03.2020
(51) Int. Cl.: C09C 1/64, C09D 7/62, C09D 11/322, C09D 11/037, C09D 201/00, C09C 3/10, C09D 11/03, C09D 11/10, C08K 9/08, C08K 3/08, C09D 5/00, C09D 7/40

(54) **ALUMINUM PIGMENT WITH ADHERENT RESINOUS COMPOUND AND PRODUCTION METHOD THEREFOR**
ALUMINIUMPIGMENT MIT ANHAFTENDER HARZVERBINDUNG UND VERFAHREN ZU SEINER HERSTELLUNG
PIGMENT D'ALUMINIUM COMPORTANT UN COMPOSÉ RÉSINEUX ADHÉRENT ET PROCÉDÉ DE PRODUCTION ASSOCIÉ

(43) Date of publication of application: 18.01.2023
(73) Proprietor: Asahi Kasei Kabushiki Kaisha, Tokyo 1000006 (JP)
(72) Inventor: YUNAZAR, Fahmi, Tokyo 100-0006 (JP)
(74) Representative: Strehl & Partner mbB
(86) International application number: PCT/JP2020/010652
(87) International publication number: WO 2021/181584

(56) References cited:
- EP-A1- 2 479 224
- WO-A1-2011/033655
- WO-A1-2018/047360
- JP-A- 2002 226 733
- JP-A- 2005 240 013
- JP-A- 2005 240 013
- JP-A- 2006 169 393
- JP-A- 2009 227 798
- JP-A- 2012 180 492
- JP-A- H0 249 076
- JP-A- S5 260 829
- JP-A- S5 260 829

## Description

### TECHNICAL FIELD

The present invention relates to: an aluminum pigment with an adherent resinous compound, which can form a metallic-tone matte finish coated film having excellent appearance and excellent alkali resistance even without containing any conventional matting agent at all (specifically, matting agent such as conventional silica particles, or urethane resin particles); a coating material or an ink composition, which contains the aluminum pigment with an adherent resinous compound; a coated film containing the coating material composition; and a printed matter containing the ink composition. Further, the present invention also relates to a method for producing the aluminum pigment with an adherent resinous compound.

### BACKGROUND ART

There are some cases in which a metallic matte coating finish is applied to an automobile body, an automobile part, an automobile interior part, a household electric appliance, and the like. In general, a method of such a metallic-tone matte coating finish is achieved by adding as an additive agent a matting agent for gloss adjustment typified by silica or urethane resin particles to a coating material in addition to an aluminum-based brilliant pigment (for example, see Patent Literatures 1 and 2).

However, in the conventional technique, when, for example, an impact from the outside is applied to a finished coated film, particles (for example, silica or urethane resin particles) which are a matting agent unevenly distributed on a surface of a coated film are scraped off, and as a result, there is a problem that a gloss in a portion from which the matting agent is scraped off is increased.

Further, not only in the field of coating materials as described above, but also in the field of ink used for high-grade printing such as gravure printing, offset printing, or screen printing, there is a demand for realization of metallic-tone matte finish that is more superior in terms of the appearance and realization by a particularly simple method in the present situation.

### CITATION LIST

### PATENT LITERATURE

PATENT LITERATURE 1: JP-A-2005-290314
PATENT LITERATURE 2: JP-A-2018-76438

JP 2005 240013 A discloses an aluminum pigment obtained by forming a resin to flaky aluminum powder and the resin comprises a polymer of at least one component (A) selected from a radical polymerizable unsaturated carboxylic acid, a monoester or diester of phosphoric acid or a phosphonic acid and having a radical polymerizable double bond and a coupling agent having a radical polymerizable double bond and at least one radical polymerizable monomer (B) containing at least one monomer containing a radical polymerizable double bond and the aluminum pigment.

JP 2002 226733 A discloses an aluminum pigment comprising a flaky aluminum powder and, formed on the surface thereof, a resin, where the resin is obtained by carrying out a first step of adding (A) at least one among a radically polymerizable unsaturated carboxylic acid, an ester of phosphoric acid and the like bearing a radically polymerizable double bond and a specific coupling agent and subsequently carrying out a second step of polymerizing (B) a monomer bearing at least three radically polymerizable double bonds.

EP 2 479 224 A1 discloses a resin-coated metal pigment comprising 100 parts by weight of a metal pigment and 0.1 to 50 parts by weight of a resin adhering to a surface of the metal pigment.

### SUMMARY OF INVENTION

### TECHNICAL PROBLEM

In view of this, in order to solve the above-described problems of the conventional technique, an object of the present invention is to provide an aluminum pigment with an adherent resinous compound, which can form a coated film having a satisfactory metallic-tone matte finish appearance and excellent alkali resistance even without containing any matting agent at all that may be scraped off from the coated film due to, for example, an impact from the outside, and further, can exhibit high water resistance even when used for a water-based coating material composition (so-called "coating material"). Further, an object of the present invention is to provide a coating material composition, which can form a finished coated film having a satisfactory metallic-tone matte finish appearance without containing any matting agent at all, in other words, can form a coated film causing no problem that a gloss in a portion from which the matting agent is scraped off is increased due to, for example, an impact caused by a coating material composition containing a conventional matting agent, even with, for example, an impact from the outside on a finished coated film.

In addition, an object of the present invention is to provide an aluminum pigment with an adherent resinous compound, which can prepare a printed matter having a satisfactory metallic-tone matte finish appearance and excellent alkali resistance even without containing any matting agent at all, and further, can exhibit high water resistance even when used for a water-based ink composition (so-called "ink"). Moreover, an object of the present invention is to provide an ink that can prepare a printed matter having the above-described effect easily, because of containing no matting agent at all.

### SOLUTION TO PROBLEM

As a result of intensive studies to solve the above problems, the present inventors have found that according to "an aluminum pigment with an adherent resinous compound, including a flaky aluminum powder and a resinous compound adherent to a surface of the flaky aluminum powder, in which the resinous compound is a polymer of a radical-polymerizable monomer and/or a radical-polymerizable oligomer each having one or more double bonds in a molecule, the resinous compound contains a polymerization initiator (hereinafter, also simply referred to as "initiator"), the initiator is not fixed onto the surface of the flaky aluminum powder and is a peroxide or an azo compound, a mass ratio of the resinous compound per unit mass of the aluminum pigment with an adherent resinous compound (hereinafter, also referred to as "A (g/g)" or "A = mass (g) of resinous compound / aluminum pigment with an adherent resinous compound (g)") is 0.35 or more to 0.55 or less, and preferably an average value of average surface roughness (Sa) of aluminum particles constituting the aluminum pigment with an adherent resinous compound is 25 nm or more to 250 nm or less", a coating material and an ink composition, which can exert a satisfactory metallic-tone matte finish appearance even without containing any matting agent at all, can be provided, a coated film having excellent alkali resistance can be formed, a printed matter having excellent alkali resistance can be prepared, and high water resistance can be exhibited even when the aluminum pigment with an adherent resinous compound is used for a water-based coating material or an ink component, and thus have completed the present invention.

That is, the present invention is as set out in the appended claims.

### ADVANTAGEOUS EFFECTS OF INVENTION

According to the present invention, an aluminum pigment with an adherent resinous compound, which can form a coated film having a satisfactory metallic-tone matte finish appearance and excellent alkali resistance even without containing any matting agent at all that may be scraped off from the coated film due to, for example, an impact from the outside, and further, can exhibit high water resistance even when used for a water-based coating material, can be obtained. Accordingly, when the aluminum pigment with an adherent resinous compound is used as a component of a coating material composition, a coating material that can exert a satisfactory metallic-tone matte finish appearance can be provided without containing any conventional matting agent at all typified by silica or urethane resin particles as an additive agent. As a result, since any problem that a gloss in a portion from which the matting agent is scraped off is increased due to, for example, an impact caused by a coating material composition containing a conventional matting agent even with, for example, the impact from the outside on a finished coated film is not inherently caused, a finished coated film having a satisfactory metallic-tone matte finish appearance, which is not affected by such an impact from the outside, can be provided.

Further, according to the present invention, an aluminum pigment with an adherent resinous compound, which can prepare a printed matter having a satisfactory metallic-tone matte finish appearance and excellent alkali resistance even without containing any matting agent at all, and further, can exhibit high water resistance even when used for a water-based ink, can be obtained.

Accordingly, when the aluminum pigment with an adherent resinous compound is used as a component of an ink composition, a water-based ink, which can prepare a printed matter having a satisfactory metallic-tone matte finish appearance and excellent alkali resistance without containing any conventional matting agent at all typified by silica or urethane resin particles as an additive agent, and further, can exhibit high water resistance, can be provided. The water-based ink can prepare a printed matter having the above effect easily, because of containing no matting agent at all.

### BRIEF DESCRIPTION OF DRAWINGS

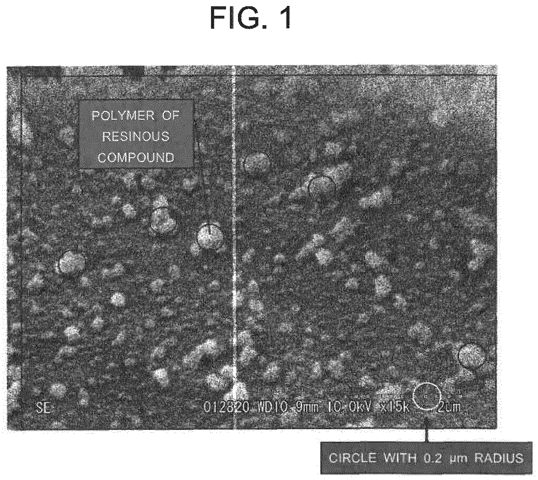

FIG. 1 is a photograph obtained by using a scanning electron microscope (S-2600H manufactured by HITACHI), showing a scanning electron microscope (SEM) image on the outermost surface of a primary particle of an aluminum pigment with an adherent resinous compound being one embodiment for carrying out the present invention.

### DESCRIPTION OF EMBODIMENTS

Hereinafter, embodiments (hereinafter, referred to as "the present embodiments") for carrying out the present invention will be described in detail. The following present embodiments are for illustrating the present invention, and do not limit the present invention to the following content. The present invention can be carried out by being appropriately modified within the range of the gist of the present invention.

### [Aluminum pigment with adherent resinous compound]

An aluminum pigment with an adherent resinous compound of the present embodiment includes a flaky aluminum powder and a resinous compound adherent to a surface of the flaky aluminum powder, and in which the resinous compound is a polymer of a radical-polymerizable monomer and/or a radical-polymerizable oligomer each having one or more double bonds in a molecule, the resinous compound contains an initiator, the initiator is not fixed onto the surface of the flaky aluminum powder and is a peroxide or an azo compound, a mass ratio of the resinous compound per unit mass of the aluminum pigment with an adherent resinous compound is 0.35 or more to 0.55 or less, and preferably an average value of average surface roughness (Sa) of aluminum particles constituting the aluminum pigment with an adherent resinous compound is 25 nm or more to 250 nm or less.

Further, it is preferable that the aluminum pigment with an adherent resinous compound of the present embodiment is one having an average value of maximum surface-roughness height (Sz) of aluminum particles of at least 200 nm or more to 2000 nm or less, the aluminum particles constituting the aluminum pigment with an adherent resinous compound, or one in which at least three resinous compounds are present per 48 µm² of the outermost surface area of the aluminum pigment with an adherent resinous compound, the resinous compounds each being adherent to the outermost surface of the aluminum pigment with an adherent resinous compound and having a portion protruding from a circle with a radius of 0.2 µm, and it is more preferable to use both of these ones.

As described above, the aluminum pigment with an adherent resinous compound of the present embodiment contains a flaky aluminum powder, and a resinous compound adherent to a surface of the flaky aluminum powder. Further, the resinous compound is a polymer of a radical-polymerizable monomer and/or a radical-polymerizable oligomer each having one or more double bonds in a molecule (this "polymer of a radical-polymerizable monomer and/or radical-polymerizable oligomer each having one or more double bonds in a molecule" will be described in detail in the item "(Resinous compound being polymer of radical-polymerizable monomer and/or radical-polymerizable oligomer each having one or more double bonds in molecule)" described later). In addition, it is preferable that the resinous compound contains an initiator not being fixed onto the surface of the flaky aluminum powder and being a peroxide or an azo compound.

In this regard, the resinous compound adherent to the flaky aluminum powder does not simply mean that the flaky aluminum powder and the resinous compound are mixed, but means that there is an interaction between the "flaky aluminum powder" and the "resinous compound".

Examples of the interaction include chemical bonding, hydrogen bonding, ionic bonding, and Van der Waals force.

Note that the "flaky aluminum powder" will be described in detail in the item "(Flaky aluminum powder)" described later.

The presence or absence of the adhesion of and the amount of the resinous compound to the aluminum pigment in the aluminum pigment with an adherent resinous compound can be confirmed, for example, by the following method.

An aluminum pigment with an adherent resinous compound is dispersed in an organic solvent, the obtained dispersion liquid is filtered to remove the resinous compound not being adherent to the aluminum pigment, and then by volatilization of the solvent, particles in a state that the resinous compound is adherent to the aluminum pigment (that is, aluminum pigment with an adherent resinous compound of the present embodiment) are obtained (B 1).

Next, (B1) is treated in an electric furnace to remove the resinous compound adherent to the aluminum pigment, and a state that the aluminum pigment is only left is obtained (B2).

The presence or absence of the adhesion of and the amount of the resin can be confirmed by calculating the mass difference between the (B 1) and the (B2).

The conditions when the resinous compound adherent to the aluminum pigment is removed in an electric furnace or the like are appropriately selected depending on the molecular weight of the resin and the crosslinking density. For example, a method of performing a treatment at a temperature condition of 350°C for 3 hours under a nitrogen atmosphere can be mentioned.

In the aluminum pigment with an adherent resinous compound of the present embodiment, a mass ratio (A(g/g)) of the above-described resinous compound per unit mass of the aluminum pigment with an adherent resinous compound is 0.35 or more to 0.55 or less. Further, from the viewpoint of the metallic-tone matte finish appearance, the mass ratio (A(g/g)) of the resinous compound per unit mass of the aluminum pigment with an adherent resinous compound is more preferably 0.39 or more to 0.52 or less, and furthermore preferably 0.40 or more to 0.50 or less.

In addition, in the aluminum pigment with an adherent resinous compound of the present embodiment, the average value of average surface roughness (Sa) of aluminum particles constituting the aluminum pigment with an adherent resinous compound is preferably at least 25 nm or more to 250 nm or less. From the viewpoint of the metallic-tone matte finish appearance, the above-described average value of average surface roughness (Sa) is more preferably 35 nm or more to 210 nm or less, and furthermore preferably 50 nm or more to 175 nm or less.

The average value of average surface roughness (Sa) of aluminum particles constituting the aluminum pigment with an adherent resinous compound of the present embodiment can be adjusted by the [Method for producing aluminum pigment with adherent resinous compound] described later.

In the aluminum pigment with an adherent resinous compound of the present embodiment, the average value of maximum surface-roughness height (Sz) of aluminum particles constituting the aluminum pigment with an adherent resinous compound is preferably 200 nm or more to 2000 nm or less. From the viewpoint of the metallic-tone matte finish appearance, the above-described average value of maximum surface-roughness height (Sz) is more preferably 280 nm or more to 1680 nm or less, and furthermore preferably 400 nm or more to 1400 nm or less.

The average value of maximum surface-roughness height (Sz) of aluminum particles constituting the aluminum pigment with an adherent resinous compound of the present embodiment can be adjusted by the [Method for producing aluminum pigment with adherent resinous compound] described later.

As described above, in the aluminum pigment with an adherent resinous compound of the present embodiment, one in which at least three resinous compounds are present per 48 µm² of the outermost surface area (that is, surface area in the outermost surface) of the aluminum pigment with an adherent resinous compound, the resinous compounds each being adherent to the outermost surface of the aluminum pigment with an adherent resinous compound and having a portion protruding from a circle with a radius of 0.2 µm is preferable.

In this regard, the adherent resinous compound in the aluminum pigment with an adherent resinous compound is usually indefinite, and it is difficult to specify the size. In view of this, adherent resinous compounds scattered per 48 µm² of the outermost surface area are specified from a SEM image on the outermost surface of a primary particle of the aluminum pigment with an adherent resinous compound, and when a circle with a radius of 0.2 µm is applied at the central part of each of the specified adherent resinous compounds, if there is even one portion protruding (that is, spreading out) from the circle in the adherent resinous compound, the adherent resinous compound corresponds to an adherent resinous compound having a portion protruding from a circle with a radius of 0.2 µm. Accordingly, it does not mean that all the part of the adherent resinous compound (that is, the whole adherent resinous compound) has to exceed the circle with a radius of 0.2 µm. This point will be described below by using a SEM image of FIG. 1. Among the adherent resinous compounds shown in the SEM image of FIG. 1, one to which a circle with a radius of 0.2 µm with a black circumference line is applied corresponds to an adherent resinous compound having a portion protruding from a circle with a radius of 0.2 µm. As can be understood from the SEM image, among the adherent resinous compounds to which a circle with a radius of 0.2 µm with a black circumference line is applied, some of them are present in the circle with a radius of 0.2 µm, that is, all of them do not exceed the circle with a radius of 0.2 µm. However, in all of the adherent resinous compounds to which a circle with a radius of 0.2 µm with a black circumference line is applied, there is at least one portion protruding from the circle with a radius of 0.2 µm, and therefore, each of the adherent resinous compounds corresponds to an adherent resinous compound having a portion protruding from a circle with a radius of 0.2 µm. On the other hand, if there is no such a protruding portion, that is, when a circle with a radius of 0.2 µm is applied at the central part of the adherent resinous compound, if all the part fits within the circle, the adherent resinous compound does not correspond to an adherent resinous compound having a portion protruding from a circle with a radius of 0.2 µm.

In the aluminum pigment with an adherent resinous compound of the present embodiment, it is preferable that at least three resinous compounds each having a portion protruding from a circle with a radius of 0.2 µm and being adherent to the outermost surface of the aluminum pigment with an adherent resinous compound are present (scattered) per 48 µm² of the outermost surface area of the aluminum pigment with an adherent resinous compound. Specifically, with 48 µm² of the outermost surface area as one field of view in relation to the metallic-tone matting, in 30 fields of view, the field of view in which 3 or more ones are present is preferably 18 fields of view or more to 24 fields of view or less, and more preferably 25 fields of view or more to 30 fields of view or less.

The aluminum pigment with an adherent resinous compound of the present embodiment exerts a metallic-tone matte finish appearance with a 60-degree specular reflectivity of 10.0 or more to less than 40.5 when the reflectivity when an incident angle and a light-receiving angle are 60 degrees, respectively is measured in accordance with the 60-degree specular gloss, for the degree of gloss (glossiness) of a coated film obtained by applying onto art paper a coating material composition having a mass ratio of solid content (PWC: pigment weight concentration) of the aluminum pigment with an adherent resinous compound of 10% based on 100 parts of solid content of the coating material composition containing no matting agent at all. It is preferable to exert a metallic-tone matte finish appearance with 16.0 or more to less than 37.5, and more preferable to exert a metallic-tone matte finish appearance with 23.0 or more to less than 34.5.

That is, the coating material composition not containing any matting agent but containing an aluminum pigment with an adherent resinous compound of the present embodiment is one from which a coated film showing a gloss of 10.0 or more to less than 40.5, preferably 16.0 or more to less than 37.5, and more preferably 23.0 or more to less than 34.5 as a 60-degree specular reflectivity when an incident angle and a light-receiving angle are 60 degrees, respectively, is obtained, by applying the one onto art paper.

The aluminum pigment with an adherent resinous compound of the present embodiment preferably shows alkali resistance with a color difference ΔE of less than 1.0 (ΔE = 1.0) when a coated film formed by applying a coating material composition containing the aluminum pigment with an adherent resinous compound and a black pigment onto an acrylic resin plate is immersed in a 5 N sodium hydroxide solution at 55°C for 4 hours, and then the coated film is evaluated in accordance with a test method of evaluating alkali resistance by a color difference ΔE between the immersed portion and the unimmersed portion. When the alkali resistance with ΔE = less than 1.0 is shown, it is preferable in that a coated film with a one-coat specification that is excellent in the workability for the field requiring extremely high alkali resistance can be provided, and it is more preferable when ΔE is 0.5 or less, and furthermore preferable when ΔE is 0.3 or less.

The above-described coating material composition can be prepared by mixing the aluminum pigment with an adherent resinous compound of the present embodiment with a black pigment. Further, the above-described color difference ΔE can be measured by a colorimeter. Specifically, the ΔE can be measured by the method (that is, see the item <4. Excellent alkali resistance> in Examples) described later.

The aluminum pigment with an adherent resinous compound of the present embodiment is significantly improved in the amount of gas generation when dispersed in an aqueous coating material as compared with a conventional product showing an amount of gas generation of 27 ml or more under the same evaluation conditions. The amount of gas generation measured by the method (that is, see the item <5. Amount of gas generation in specific aqueous coating material> in Examples) described later is preferably less than 3 ml, and more preferably 1 ml or less.

### (Flaky aluminum powder)

As the "flaky aluminum powder" used for the aluminum pigment with an adherent resinous compound of the present embodiment, one having the surface texture, particle diameter, and shape required for a metallic pigment, such as surface glossiness, whiteness, and brilliance is suitable.

As the shape, there may be various shapes such as a granular shape, a plate shape, a lump shape, and a scale shape, but it is preferable to be a scale shape in order to give an excellent metallic texture and brightness to a coated film.

The flaky aluminum powder preferably has a thickness in the range of 0.001 µm or more to 1 µm or less, and a particle diameter in the range of 1 µm or more to 100 µm or less.

The aspect ratio of the flaky aluminum powder is preferably in the range of 10 or more to 20000 or less.

In this regard, the aspect ratio is a value obtained by dividing the average particle diameter of the flaky aluminum powder by the average thickness of the flaky aluminum powder.

Further, the purity of the flaky aluminum powder is not particularly limited, but the flaky aluminum powder used for a coating material has preferably a purity of 99.5% or more.

The flaky aluminum powder can be obtained by a known method, for example, a production method disclosed in WO 1999/54074 A, and the flaky aluminum powder is usually available in a paste state on the market and this can also be used.

### (Resinous compound being polymer of radical-polymerizable monomer and/or radical-polymerizable oligomer each having one or more double bonds in molecule)

The "radical-polymerizable monomer and/or radical-polymerizable oligomer" is not particularly limited, and a conventionally known one can be used.

Examples of the radical-polymerizable monomer and/or radical-polymerizable oligomer include, but are not limited to, a (meth)acrylic acid, a (meth)acrylic acid ester, an aromatic vinyl compound, a vinyl cyanide, and further an amide group-containing vinyl monomer, a hydroxyl group-containing vinyl-based monomer, an epoxy group-containing vinyl monomer, a carbonyl group-containing vinyl monomer, an anionic vinyl monomer, a mono- or di-ester of phosphoric acid or phosphonic acid, and a vinyl monomer having a silyl group.

Note that in the present specification, the term "(meth)acrylic" is a simple expression of methacrylic or acrylic.

Examples of the (meth)acrylic acid ester include, but are not limited to, a (meth)acrylic acid alkyl ester having 1 to 50 carbon atoms in the alkyl moiety, and a (poly)oxyethylene di(meth)acrylate having 1 to 100 ethylene oxide groups.

Examples of the (meth)acrylic acid ester include, but are not limited to, a methyl (meth)acrylate, an ethyl (meth)acrylate, a n-butyl (meth)acrylate, a 2-ethylhexyl (meth)acrylate, a methylcyclohexyl (meth)acrylate, a cyclohexyl (meth)acrylate, a lauryl (meth)acrylate, and a dodecyl (meth)acrylate.

Examples of the (poly)oxyethylene di(meth)acrylate include, but are not limited to, an ethylene glycol di(meth)acrylate, a diethylene glycol di(meth)acrylate, a methoxy diethylene glycol (meth)acrylate, and a tetraethylene glycol di(meth)acrylate.

In addition to the above, examples of the (poly)oxyethylene di(meth)acrylate also include a trimethylolpropane tri(meth)acrylate, a tetramethylolpropane tetra(meth)acrylate, a di-trimethylolpropane tetra(meth)acrylate, a pentaerythritol tetra(meth)acrylate, a di-pentaerythritol hexa(meth)acrylate, a di-pentaerythritol penta(meth)acrylate, and a di-pentaerythritol penta(meth)acrylate monopropionate.

Further, a cyclic unsaturated compound (for example, cyclohexene), and an aromatic unsaturated compound (for example, styrene, α-methyl styrene, vinyl toluene, divinylbenzene, cyclohexene vinyl vinyl monooxide, divinylbenzene monooxide, vinyl acetate, vinyl propionate, allylbenzene, or diallylbenzene) can also be suitably used.

Moreover, examples of the hydroxyl group-containing vinyl monomer include, but are not limited to, a hydroxyalkylester of (meth)acrylate such as a 2-hydroxyethyl (meth)acrylate, a 2-hydroxypropyl (meth)acrylate, a 3-hydroxypropyl (meth)acrylate, a 2-hydroxybutyl (meth)acrylate, a 3-hydroxybutyl (meth)acrylate, or a 4-hydroxybutyl (meth)acrylate, di-2-hydroxyethyl fumarate, mono-2-hydroxyethyl monobutyl fumarate, allyl alcohol, a (poly)oxyethylene mono(meth)acrylate having 1 to 100 ethylene oxide groups, a (poly)oxypropylene mono(meth)acrylate having 1 to 100 propylene oxide groups, further, "PLACCEL FM, FA monomer" (trade name of caprolactone-added monomer, manufactured by DAICEL CHEMICAL INDUSTRIES, LTD.), and other hydroxyalkylesters of α,β-ethylenically unsaturated carboxylic acid.

Examples of the (poly)oxyethylene mono(meth)acrylate include, but are not limited to, an ethylene glycol (meth)acrylate, a methoxy ethylene glycol (meth)acrylate, a diethylene glycol (meth)acrylate, a methoxy diethylene glycol (meth)acrylate, a tetraethylene glycol (meth)acrylate, and a methoxy tetraethylene glycol (meth)acrylate.

Further, examples of the (poly)oxypropylene mono(meth)acrylate include, but are not limited to, a propylene glycol (meth)acrylate, a methoxy propylene glycol (meth)acrylate, a dipropylene glycol (meth)acrylate, a methoxy dipropylene glycol (meth)acrylate, a tetrapropylene glycol (meth)acrylate, and a methoxy tetrapropylene glycol (meth)acrylate.

In addition, examples of the epoxy group-containing vinyl monomer include, but are not limited to, a glycidyl (meth)acrylate, allyl glycidyl ether, and allyl dimethyl glycidyl ether.

Moreover, examples of the mono- or di-ester of phosphoric acid or phosphonic acid include, but are not limited to, 2-methacryloyloxyethyl phosphate, di-2-methacryloyloxyethyl phosphate, tri-2-methacryloyloxyethyl phosphate, 2-acryloyloxyethyl phosphate, di-2-acryloyloxyethyl phosphate, tri-2-acryloyloxyethyl phosphate, diphenyl-2-acryloyloxyethyl phosphate, dibutyl-2-methacryloyloxyethyl phosphate, dioctyl-2-acryloyloxyethyl phosphate, 2-methacryloyloxypropyl phosphate, bis(2-chloroethyl)vinyl phosphonate, diallyl dibutyl phosphonosuccinate, 2-methacryloyloxyethyl phosphate, and 2-acryloyloxyethyl phosphate.

Further, examples of the vinyl monomer having a silyl group include, but are not limited to, 3-(meth)acryloxypropyltrimethoxysilane, 3-(meth)acryloxypropyltriethoxysilane, 3-(meth)acryloyloxypropyl methyldimethoxysilane, 3-(meth)acryloyloxypropyltri-n-propoxysilane, 3-(meth)acryloyloxypropyltriisopropoxysilane, vinyltrimethoxysilane, vinyltriethoxysilane, allyltrimethoxysilane, and 2-trimethoxysilyl ethyl vinyl ether.

In addition, examples of the other resinous compounds include, but are not limited to, an olefin such as (meth)acrylamide, ethylene, propylene, or isobutylene; a diene such as butadiene; a haloolefin such as vinyl chloride, vinylidene chloride, vinyl fluoride, tetrafluoroethylene, or chlorotrifluoroethylene; a carboxylic acid vinyl ester such as vinyl acetate, vinyl propionate, vinyl n-butylate, vinyl benzoate, vinyl p-t-butyl benzoate, vinyl pivalate, vinyl 2-ethylhexanoate, vinyl versatate, or vinyl laurate; a carboxylic acid isopropenyl ester such as isopropenyl acetate, or isopropenyl propionate; a vinyl ether such as ethyl vinyl ether, isobutyl vinyl ether, or cyclohexyl vinyl ether; an aromatic vinyl compound such as styrene, or vinyl toluene; an allyl ester such as allyl acetate, or allyl benzoate; an allyl ether such as allyl ethyl ether, or allyl phenyl ether; 4-(meth)acryloyloxy-2,2,6,6,-tetramethylpiperidine, 4-(meth)acryloyloxy-1,2,2,6,6,-pentamethylpiperidine, perfluoromethyl (meth)acrylate, perfluoropropyl (meth)acrylate, perfluoropropylmethyl (meth)acrylate, vinylpyrrolidone, and allyl (meth)acrylate. The resinous compounds may be used singly alone or in combination with two or more kinds thereof.

### (Polymerization initiator)

When the aluminum pigment with an adherent resinous compound of the present embodiment is produced, it is preferable to use as the initiator a polymerization initiator of a peroxide or an azo compound, which is not fixed onto a surface of a flaky aluminum powder.

As to the method for producing the aluminum pigment with an adherent resinous compound of the present embodiment, see the item (that is, "[Method for producing aluminum pigment with adherent resinous compound]") described later.

The polymerization initiator is generally known as a radical generator, and the kind thereof is not particularly limited.

Examples of the polymerization initiator include, but are not limited to, a peroxide such as benzoyl peroxide, lauroyl peroxide, or bis-(4-t-butylcyclohexyl) peroxydicarbonate; and an azo compound such as 2,2'-azobis-isobutyronitrile, 2,2'-azobis-2,4-dimethylvaleronitrile, or 2,2'-azobis-4-methoxy-2,4-dimethylvaleronitrile.

The amount of the polymerization initiator to be used is not particularly limited because it is adjusted by the reaction rate of a radical-polymerizable monomer and/or a radical-polymerizable oligomer, but is preferably in the range of 0.1 parts by mass or more to 25 parts by mass or less based on 100 parts by mass of the flaky aluminum powder.

### (Other components)

In the aluminum pigment with an adherent resinous compound of the present embodiment, as will be described later, after dispersion of a flaky aluminum powder in a predetermined organic solvent, a chain transfer agent may be added together with the above-described radical-polymerizable monomer and/or radical-polymerizable oligomer for the purpose of controlling the molecular weight of a reaction product.

Examples of the chain transfer agent include, but are not limited to, an alkyl mercaptan such as n-octyl mercaptan, n-dodecyl mercaptan, or t-dodecyl mercaptan; an aromatic mercaptan such as benzyl mercaptan, or dodecyl benzyl mercaptan; a thiocarboxylic acid such as thiomalic acid or a salt thereof, or an alkyl ester or a polythiol thereof, diisopropyl xanthogen disulfide, di(methylenetrimethylolpropane) xanthogen disulfide, thio glycol, and an allyl compound such as a dimer of α-methyl styrene.

The amount of the chain transfer agent to be used is in the range of preferably 0.001% by mass or more to 30% by mass or less, and more preferably 0.05% by mass or more to 10% by mass or less, based on the resin.

### [Method for producing aluminum pigment with adherent resinous compound]

The aluminum metal pigment with an adherent resinous compound of the present embodiment can be produced by dispersing a flaky aluminum powder in an organic solvent, then adding a radical-polymerizable monomer and/or a radical-polymerizable oligomer, and a polymerization initiator as needed into the obtained dispersion liquid while heating and stirring, and conducting reaction of the resultant dispersion liquid while applying an external vibration action (for example, irradiating with ultrasonic waves by an ultrasonic generator).

The organic solvent may be inert to the flaky aluminum powder, and examples of the organic solvent include, but are not limited to, an aliphatic hydrocarbon such as hexane, heptane, octane, or mineral spirit; an aromatic hydrocarbon such as benzene, toluene, xylene, or solvent naphtha; naphthenic hydrocarbon; isoparaffinic hydrocarbon; an ether such as tetrahydrofuran, or diethyl ether; an alcohol such as ethanol, 2-propanol, or butanol; an ester such as ethyl acetate, or butyl acetate; and a cellosolve such as ethylene glycol monoethyl ether.

The mass concentration of the flaky aluminum powder in an organic solvent is preferably 0.1% by mass or more to 40% by mass or less, and more preferably 1% by mass or more to 35% by mass or less.

From the viewpoint of efficiently performing the adhesion of a resinous compound to the flaky aluminum powder, the mass concentration of the flaky aluminum powder in an organic solvent is preferably 0.1% by mass or more, and more preferably 1% by mass or more. Further, from the viewpoint of keeping the dispersion state of the flaky aluminum powder uniform, the mass concentration of the flaky aluminum powder in an organic solvent is preferably 40% by mass or less, and more preferably 35% by mass or less.

The mass concentration of the radical-polymerizable monomer and/or radical-polymerizable oligomer in an organic solvent is preferably 0.06% by mass or more to 27% by mass or less, and more preferably 0.6% by mass or more to 23% by mass or less. From the viewpoint of efficiently performing the adhesion of a resinous compound to the flaky aluminum powder, the mass concentration is 0.06% by weight or more, and more preferably 0.6% by mass or more. From the viewpoint of keeping the adhesion state of a resinous compound to the flaky aluminum powder uniform, the mass concentration is preferably 27% by mass or less, and more preferably 23% by mass or less.

When the aluminum pigment with an adherent resinous compound of the present embodiment is produced, it is preferable to apply a shearing external action and an external vibration action in combination as the external action.

The shearing external action refers to an action of applying a high shearing force to promote physical dispersion when the aluminum pigment is dispersed in an organic solvent, and a monomer is added to the dispersion liquid, and as the method for that purpose, for example, a method of dispersing an aluminum pigment and a monomer by using a disperser can be mentioned.

The external vibration action refers to an action of mechanically and strongly vibrating the dispersion liquid or a mixture solution during polymerization reaction by using a vibration generator, an ultrasonic generator, or the like, to promote physical dispersion.

Examples of the mode of applying the external vibration action include various modes such as a mode of intermittent application during polymerization reaction, a mode of continuous application during polymerization reaction, and a mode of a combination of intermittent application and continuous application during polymerization reaction.

Further, examples of the method of applying an external vibration action include a method of applying vibration and applying an external action indirectly from a vibration generator and an ultrasonic vibrator to a reactor by irradiation of ultrasonic waves, a method of directly applying a vibrational external action to a treated dispersion liquid in a reactor, and a method of circulating a treated dispersion liquid in an external circulation-type container and indirectly or directly applying an external vibration action to the external circulation-type container.

The vibration of an external action by a vibration generator or the like is preferably performed at a frequency of 10 Hz or more to 24 kHz or less.

The ultrasonic waves of an external action by an ultrasonic generator or the like are a kind of elastic vibration transmitting through an elastic body, and are usually longitudinal waves that transmit the compression and expansion in the traveling direction of the waves, but may be transverse waves on a reaction tank wall and a contact surface thereof or the like. In this regard, sound waves that are not intended to be directly heard are also included in the ultrasonic waves as the technical definition, and all the sound waves that transmit through the surface or inside of a liquid or a solid are also included in the ultrasonic waves. The ultrasonic waves having a frequency of 15 kHz or more to 10000 kHz or less and an output of 5 W or more can be preferably used.

When a polymerization initiator is used in polymerization reaction of a radical-polymerizable monomer and/or a radical-polymerizable oligomer, the timing of addition of the polymerization initiator is not particularly limited, but it is preferable to add the polymerization initiator at the same time as and/or after the radical-polymerizable monomer and/or the radical-polymerizable oligomer.

The temperature at which the polymerization initiator is added is not particularly limited as long as the polymerization reaction of the radical-polymerizable monomer and/or the radical-polymerizable oligomer occurs, but is preferably 40°C or more to 150°C or less. Further, in order to increase the reaction efficiency, it is preferable to perform the addition and the reaction under an atmosphere of an inert gas such as nitrogen or helium.

In addition, in the reaction of the radical-polymerizable monomer and/or the radical-polymerizable oligomer, it is possible to add a solvent as needed or to perform substitution.

As the organic solvent, an ester-based solvent is preferable from the viewpoint of environmental load and dryness.

In particular, it is preferable to use propyl acetate from the viewpoint of adhesion and odor because the amount of residual solvent is small even when the drying temperature is low.

### [Use mode of aluminum pigment with adherent resinous compound]

The aluminum pigment with an adherent resinous compound of the present embodiment can be used as a pigment for a coating material composition or an ink composition (that is, a pigment component of a coating material composition or a pigment component of an ink composition).

In this regard, in a coating material composition or an ink composition, which contains the aluminum pigment with an adherent resinous compound of the present embodiment, a matting agent is not required because the matte effect can be provided without containing any matting agent at all. In this regard, the matting agent means an additive agent of solid particles to be used for the purpose of giving a matte effect, and is usually distinguished from a pigment. Specific examples of the matting agent include inorganic particles such as silica particles, ceramic particles, or lime particles, and organic particles such as urethane resin particles (urethane beads), acrylic resin particles (acrylic beads), polyethylene resin particles (polyethylene beads), polyolefin wax or derivative particles thereof, montan wax or derivative particles thereof, or paraffin wax or derivative particles thereof. However, it is possible to arbitrarily add such a matting agent in the coating material composition or the ink composition.

As the coating material composition or the ink composition, either a solvent type or an aqueous type can be used.

When the aluminum pigment with an adherent resinous compound of the present embodiment is used in the solvent-type coating material or the ink composition, as the resin for the coating material composition or the ink composition, a resin for a coating material or an ink, which is used in a conventional metallic coating material and a metallic ink, can be used.

Examples of the resin for a coating material composition or an ink composition include, but are not limited to, acrylic resin, alkyd resin, oil-free alkyd resin, vinyl chloride resin, urethane resin, melamine resin, unsaturated polyester resin, urea resin, cellulosic resin, epoxy resin, and fluorine resin.

These may be used singly alone, or by mixing two or more kinds thereof.

When used as a pigment for a solvent-type coating material or ink composition, as to the amount of the aluminum pigment with an adherent resinous compound of the present embodiment to be used, a mass ratio of solid content (PWC) of the aluminum pigment with an adherent resinous compound is preferably 5% or more to 40% or less based on 100 parts of solid content of the coating material composition. From the viewpoint of the metallic-tone matting, the mass ratio of solid content is preferably 8% or more to 25% or less, and particularly preferably 10%.

Examples of the diluent for a solvent-type coating material and an ink include, but are not limited to, an aromatic compound such as toluene, or xylene; an aliphatic compound such as hexane, heptane, or octane; an alcohol such as ethanol, or butanol; an ester such as ethyl acetate, or butyl acetate; a ketone such as methyl ethyl ketone; a chlorine compound such as trichloroethylene; and a cellosolve such as ethylene glycol monoethyl ether. These diluents may be used singly alone, or by mixing two or more kinds thereof.

The composition of the diluent may be appropriately determined in consideration of the solubility to a resin for a coating material or an ink, the formation characteristics of a coated film, the coating workability, and the like.

In addition, into a coating material or an ink, an additive agent such as a pigment, a dye, a wetting agent, a dispersant, an antiflooding agent, a leveling agent, a slipping agent, an antiskinning agent, an antigelling agent, or an antifoaming agent, which is commonly used in the coating material industry, may further be added.

Further, the coating material and the ink can also be used as an aqueous coating material by using a resin for an aqueous coating material.

In this regard, in a case of using an aluminum pigment, the aluminum pigment may react with water in the aqueous coating material and the ink. In such a case, it is necessary to add a reaction inhibitor.

In this regard, the resin for an aqueous coating material is a water-soluble resin or a water-dispersible resin, and may be used singly alone, or may be a mixture of two or more kinds. The kind may be appropriately selected depending on the purpose and application, and is not particularly limited, but in general, examples of the resin for an aqueous coating material include acrylic, acrylic-melamine-based, polyester-based, and polyurethane-based resins. Among them, an acrylic-melamine-based resin is most widely used.

When used as a water-based coating material or an ink, as to the amount of the aluminum pigment with an adherent resinous compound of the present embodiment to be used, a mass ratio of solid content (PWC) of the aluminum pigment with an adherent resinous compound is preferably 5% or more to 40% or less based on 100 parts of solid content of the coating material composition. From the viewpoint of the metallic-tone matting, the mass ratio of solid content is preferably 8% or more to 25% or less, and particularly preferably 10%.

Further, as various kinds of additive agents, additive agents, for example, a dispersant, a thickener, an antisag agent, a fungicide, a UV absorber, a film-forming auxiliary, a surfactant, other organic solvents, water, and the like can be all used as long as such additive agents can be usually used in the field to which the inventor belongs and do not impair the effects of the present invention, and further, it is preferable to add such additive agents in an amount to the extent that the effects of the present invention are not impaired.

### [Coating method]

As the coating method using a coating material or an ink, which contains the aluminum pigment with an adherent resinous compound of the present embodiment, a known method can be applied.

Examples of the coating method include a spray coating method, a flow coating method, a roll coating method, a brush coating method, a dip coating method, a spin coating method, a screen printing method, a casting method, a gravure printing method, and a flexographic printing method.

Further, after the coating, if desired, a heat treatment at preferably 20°C or more to 500°C or less and more preferably 40°C or more to 250°C or less, UV irradiation, and the like can be performed. In addition, a coating material can be coated on a substrate heated to 40°C or more to 250°C or less.

### [Use]

The aluminum pigment with an adherent resinous compound of the present embodiment can be used for coating for automobile, general household electric appliances, or information household appliances typified by mobile phones, or used for predetermined printing.

A substrate made of a predetermined material, for example, a metal such as iron or a magnesium alloy, or plastic, can be coated and printed with the aluminum pigment with an adherent resinous compound of the present embodiment, and a metallic-tone matte finish appearance can be exerted.

### Examples

Hereinafter, the present invention will be described in detail by referring to specific examples and comparative examples, however, the present invention is not limited at all by the following examples.

In Examples and Comparative Examples, various physical properties were measured by the following methods.

### [Measurement method of physical properties]

### <1.Mass (A (g/g)) of resinous compound per unit mass of aluminum pigment with adherent resinous compound>

Into a 100-ml beaker, 1 g of an aluminum pigment with an adherent resinous compound (aluminum paste) obtained in each of Examples 1 to 12 and Comparative Examples 2 to 6 was weighed, 50 ml of petroleum benzene was added and sufficiently dispersed, and then the obtained dispersion liquid was heated for 1 hour on a constant-temperature water bath at 40°C.

The dispersion liquid after the heating was filtered, and thoroughly washed with acetone before recovery. A sample in a solid state obtained after the filtration was dried for 24 hours or more in a desiccator.

Part of the dried sample was analyzed by thermogravimetric-differential thermal TG-DTA (TG-DTA STA2500 Regulus manufactured by NETZSCH) at from a room temperature to 550°C (heating rate: 10°C/min), and a mass ratio (A (g/g)) of the resinous compound per unit mass of the aluminum pigment with an adherent resinous compound in the aluminum pigment with an adherent resinous compound was determined.

The mass ratio (A(g/g)) of the resinous compound per unit mass of the aluminum pigment with an adherent resinous compound in the aluminum pigment with an adherent resinous compound in each of Examples and Comparative Examples is specifically as shown in Table 1.

### <2. Average value of average surface roughness (Sa) of aluminum particles constituting aluminum pigment with adherent resinous compound>

Into a 100-ml beaker, 10 mg of an aluminum pigment with an adherent resinous compound (aluminum paste) obtained in each of Examples 1 to 12 and Comparative Examples 2 to 6 was weighed, 5 ml of hexane was added and sufficiently dispersed, and then the obtained dispersion liquid was subjected to centrifugation to remove the supernatant solvent. After repeating the above operation twice, 5 ml of hexane was added to prepare a suspension. One drop of the prepared suspension was dropped onto a sample table specialized for observation of a scanning probe microscope (HITACHI AFM5100N: general-purpose compact probe microscope unit, HITACHI AFM5000II: controller for scanning probe microscope 150 µm scanner, Mode: DFM, and Cantilever: sensor-type built-in lever, PRC-DF40P), and then, the sample table was placed in a dryer at 50°C and dried for 3 hours.

After the drying, the surface roughness state on a primary particle of the aluminum pigment with an adherent resinous compound was confirmed with the average surface roughness in a 3-µm square area (X data number: 512, Y data number: 512) in one field of view of a primary particle by using the above-described scanning probe microscope. After confirming that the entire surface of the particle surface occupies the above-described 3-µm square area in one field of view at around the center of the surface of the primary particle per one primary particle, the average surface roughness was measured. The above operation was performed for 10 fields of view, and the surface roughness of each of the 10 fields of view was determined. The average surface roughness (Sa) was calculated after performing primary tilt correction (automatically). Further, the average value of average surface roughness (Sa) of aluminum particles constituting the aluminum pigment with an adherent resinous compound was determined. That is, the average value of average surface roughness (Sa) of aluminum particles constituting the aluminum pigment with an adherent resinous compound is a value of (Sa1 + Sa2 + ... + Sa10)/10 when assuming that the values of surface roughness (Sa) of aluminum particle in respective fields of view are Sa1, Sa2, ..., and Sa10.

Note that the average value of average surface roughness (Sa) may be controlled in some cases by the mass ratio (A(g/g)) of the resinous compound per unit mass of the aluminum pigment with an adherent resinous compound and the particle diameter of the flaky aluminum powder. In such cases, for example, the average value of average surface roughness (Sa) can be controlled by varying the particle diameter of the flaky aluminum powder in the same mass ratio (A(g/g)) of the resinous compound per unit mass of the aluminum pigment with an adherent resinous compound. Further, conversely, the average value of average surface roughness (Sa) can also be controlled by varying the mass ratio (A(g/g)) of the resinous compound per unit mass of the aluminum pigment with an adherent resinous compound in the same particle diameter of the flaky aluminum powder.

The average value of average surface roughness (Sa) of aluminum particles constituting the aluminum pigment with an adherent resinous compound in each of Examples and Comparative Examples is specifically as shown in Table 1.

### <3. Average value of maximum surface-roughness height (Sz) of aluminum particles constituting aluminum pigment with adherent resinous compound>

By using the sample prepared by the above method (that is, a sample prepared in the item <1. Mass (A (g/g) of resinous compound per unit mass of aluminum pigment with adherent resinous compound> of Examples), and a scanning probe microscope, the maximum surface-roughness height in a 3-µm square area (X data number: 512, Y data number: 512) in one field of view of a primary particle of the aluminum pigment with an adherent resinous compound is also confirmed. The maximum height represents a distance from the highest point to the lowest point of the surface roughness of aluminum particles constituting the aluminum pigment with an adherent resinous compound. After confirming that the entire surface of the particle surface occupies the above-described 3-µm square area in one field of view at around the center of the surface of the primary particle per one primary particle, the maximum surface-roughness height was measured. The above operation was performed for 10 fields of view, and the maximum surface-roughness height of the 10 fields of view was determined. The maximum surface-roughness height (Sz) was calculated after performing primary tilt correction (automatically). Further, the average value of maximum surface-roughness height (Sz) of aluminum particles constituting the aluminum pigment with an adherent resinous compound was determined. That is, the average value of maximum surface-roughness height (Sz) of aluminum particles constituting the aluminum pigment with an adherent resinous compound is a value of (Sz1 + Sz2 + ... + Sz10)/10 when assuming that the values of surface height (Sz) of aluminum particle in respective fields of view are Sz1, Sz2, ..., and Sz10.

Note that the average value of maximum surface-roughness height (Sz) may also be controlled in some cases by the mass ratio (A(g/g)) of the resinous compound per unit mass of the aluminum pigment with an adherent resinous compound and the particle diameter of the flaky aluminum powder in a similar manner to the average value of average surface roughness (Sa). In such cases, for example, in a similar manner to the average value of average surface roughness (Sa), the average value of maximum surface-roughness height (Sz) can be controlled by varying the particle diameter of the flaky aluminum powder in the same mass ratio (A(g/g)) of the resinous compound per unit mass of the aluminum pigment with an adherent resinous compound. Further, conversely, the average value of maximum surface-roughness height (Sz) can be controlled by varying the mass ratio (A(g/g)) of the resinous compound per unit mass of the aluminum pigment with an adherent resinous compound in the same particle diameter of the flaky aluminum powder.

The average value of average maximum surface-roughness height (Sz) of aluminum particles constituting the aluminum pigment with an adherent resinous compound in each of Examples and Comparative Examples is specifically as shown in Table 1.

### <4. The number of resinous compound having portion protruding from circle with radius of 0.2 µm per 48 µm² of the outermost surface area, adherent to the outermost surface of aluminum pigment with adherent resinous compound (that is, the number of indefinite polymers of resinous compound)>

Into one gram of the aluminum pigment with an adherent resinous compound obtained in each of Examples 1 to 12 and Comparative Examples 2 to 6, 5 g of ethyl acetate and 5 g of methyl ethyl ketone were added, and the mixture was stirred for 5 minutes with a magnet stirrer to obtain a dispersion liquid. One drop of the dispersion liquid was dropped onto a sample table specialized for observation of a scanning probe microscope (S-2600H manufactured by HITACHI), and then, the sample table was placed in a dryer at 50°C and dried for 3 hours.

The state on the outermost surface of a primary particle of the aluminum pigment with an adherent resinous compound was observed over the entire surface by using the above scanning electron microscope at a magnification of 15000 times. With 48 µm² of the outermost surface area as one field of view, 30 fields of view were observed. Except for the resinous compounds scattered in an edge part of the primary particle of the aluminum pigment with an adherent resinous compound, the number of resinous compounds having a size larger than a circle with a radius of 0.2 µm, which are adherent to the outermost surface in a flat part of the primary particle of the aluminum pigment with an adherent resinous compound, was counted, and the evaluation was performed as follows in association with the metallic-tone matting. ∘ indicates that the metallic-tone matting is most favorable, and is at a level equivalent to or more than that in a case of using a conventional matting agent, and Δ indicates that the metallic-tone matting is inferior to that of ∘ but is at a level having no problem in terms of practical use. However, × indicates that the metallic-tone matting is at a level having a problem in terms of practical use. Therefore, ∘ and Δ were regarded as acceptable, but × was regarded as unacceptable.

In this regard, FIG. 1 shows a SEM image in one field of view on the outermost surface of a primary particle of the aluminum pigment with an adherent resinous compound obtained in Example 1.

### Evaluation:

∘: In 30 fields of view, the field of view in which 3 or more ones are present is 25 fields of view or more to 30 fields of view or less.
Δ: In 30 fields of view, the field of view in which 3 or more ones are present is 18 fields of view or more to 24 fields of view or less.
×: In 30 fields of view, the field of view in which 3 or more ones are present is less than 18 fields of view.

### <3. Metallic-tone matte finish appearance>

By using an aluminum pigment with an adherent resinous compound obtained in each of the Examples and Comparative Examples described later, a metallic base coating material composition having the following composition was prepared.

Metallic base coating material composition:
· Aluminum pigment with an adherent resin (Examples 1 to 12 and Comparative Examples 2 to 6): (C1) = 3.23 g (mass of solid content)
· Flaky aluminum powder paste 0.92 g and acrylic resin particle 2.31 (Comparative Example 1): (C2) = 3.23 g (mass of solid content)
· Thinner (trade name "ACRYLIC 2000GL thinner, standard sample, 294-901", Kansai Paint Co., Ltd.): (D) g

In this regard, the mass of (D) was adjusted so that the total amount of (C1) of each aluminum pigment with an adherent resin or (C2) of the flaky aluminum powder paste and (D) was 13 g.
· Clear (trade name "ACRYLIC #2000 clear, standard sample, 15-342-911", Kansai Paint Co., Ltd.): 97 g

After shaking the above-described metallic base coating material composition for 10 minutes by using a paint shaker, art paper was coated with the obtained metallic base coating material by an applicator (Type YA-9, YOSHIMITSU SEIKI) so that the dry film thickness was 30 µm, and a coated film was obtained.

The obtained coated film was dried at 20°C for 24 hours, and used as an evaluation sample.

By using a glossmeter (Digital Variable Gloss Meter UGV-5D manufactured by Suga Test Instruments Co., Ltd.), the 60-degree gloss (an incident angle and a reflection angle are both 60 degree) was measured, and expressed by percentage when the glossiness on a reference surface of specular gloss was taken as 100. The evaluation criteria are as follows, and in consideration of the practical use, ∘ and ⊙ were regarded as acceptable, but × was regarded as unacceptable.

### Evaluation:

×: The value of 60-degree specular reflectivity is 40.5 or more
∘: The value of 60-degree specular reflectivity is 34.5 or more to less than 40.5
⊙: The value of 60-degree specular reflectivity is 23.0 or more to less than 34.5
∘: The value of 60-degree specular reflectivity is 10.0 or more to less than 23.0
×: The value of 60-degree specular reflectivity is less than 10.0

### <4. Alkali resistance>

By using an aluminum pigment with an adherent resinous compound obtained in each of Examples and Comparative Examples, a metallic base coating material composition having the following composition was prepared.

Metallic base coating material composition:
· Aluminum pigment with an adherent resinous compound (Examples 1 to 12 and Comparative Examples 2 to 6): (E1) = 2 g
· Flaky aluminum powder paste 0.57 g and acrylic resin particle 1.43 (Comparative Example 1): (E2) = 2 g

In this regard, (E1) of each aluminum pigment with an adherent resin or (E2) of the flaky aluminum powder paste was mixed with the following materials to prepare a coating material.
· Ethyl acetate: 2 g
· Black pigment-containing acrylic resin (SV-9 manufactured by Origin Electric Co., Ltd): 21 g
· Thinner (#174 manufactured by Origin Electric Co., Ltd): 30 g

An acrylonitrile-butadiene-styrene (ABS) resin plate was coated with the above coating material by using an air spray device so that the dry film thickness was 20 µm, the coated plate was dried for 30 minutes in an oven at 60°C, and a coated plate for evaluation was obtained.

The lower half of the coated plate prepared in the above was immersed in a 5.0 N aqueous solution of NaOH placed in a beaker, and was left to stand at 55°C for 4 hours. The coated plate after the test was washed with water and dried, and then the immersed portion and the unimmersed portion were subjected to color measurement in accordance with JIS-Z-8722 (8-d method), and the color difference ΔE was determined in accordance with JIS-Z-8730. The evaluation was performed as follows corresponding to the value of color difference ΔE. It was determined that the smaller the value was, the more excellent the alkali resistance of a coated film formed on a coated plate was. In consideration of the practical use, ∘ was regarded as acceptable, but × was regarded as unacceptable.

### Evaluation:

∘: ΔE is less than 1.0
×: ΔE is 1.0 or more

### <5. Amount of gas generation in specific aqueous coating material>

By using an aluminum pigment with an adherent resinous compound obtained in each of Examples and Comparative Examples, a specific aqueous coating material was prepared with the following composition.

Aqueous coating material composition:
· Aluminum pigment with an adherent resinous compound (Examples 1 to 12 and Comparative Examples 2 to 6): (F1) = 5 g
· Flaky aluminum powder paste 1.43 g and acrylic resin particle 3.57 (Comparative Example 1): (F2) = 5 g

In this regard, (F1) of each aluminum pigment with an adherent resinous compound or (F2) of the flaky aluminum powder paste was mixed with the following materials to prepare an aqueous coating material.
· Methoxy propanol: 40 g
· Water: 50 g
· Acrylic emulsion (trade name "NeoCryl A-2091" manufactured by DSM): 110 g

Each aqueous coating material prepared in this way was placed in a 200-ml Erlenmeyer flask, a measuring pipette with a rubber stopper was attached to the flask, and the amount of gas generation after being left to stand at 40°C for 72 hours was measured. The evaluation criteria are as follows, and it was determined that the smaller the amount of gas generation was, the more excellent the coating material was. In consideration of the practical use, ∘ was regarded as acceptable, but × was regarded as unacceptable.

### Evaluation:

∘: Less than 3 ml
×: 3 ml or more

### [Example 1]

Into a 2-L four-neck flask, 83 g of flaky aluminum powder paste FD-5060 (manufactured by Asahi Kasei Corporation, average particle diameter: 6 µm, aspect ratio: 55, and non-volatile content: 72%) was placed, 457 g of mineral spirit was added, the mixture was stirred while introducing nitrogen gas, and the stirring was continued for 60 minutes after the temperature in the system was raised to 70°C.

Next, into the resultant mixture, 1.8 g of acrylic acid was added, and the stirring was continued at 70°C for 60 minutes.

Next, a solution including 6.2 g of trimethylolpropane trimethacrylate, 2.6 g of di-trimethylolpropane tetraacrylate, 0.3 g of 2,2'-azobis-2,4-dimethylvaleronitrile, and 124 g of mineral spirit was prepared, and all the solution was added dropwise into the above stirred mixture over 4.5 hours at a dropwise addition rate of around 0.5 g/min. After completion of the dropwise addition, the system temperature was lowered up to 50°C, and after reaching 50°C, the resultant mixture was stirred for 1.5 hours, and the first polymerization step of 6.0 hours was completed.

During the first polymerization step of 6.0 hours, the mixture in the 2-L four-neck flask was indirectly irradiated with ultrasonic waves by using an ultrasonic cleaner (CPX5800H-J manufactured by Emerson Japan, Ltd., oscillation frequency: 40 kHz, maximum ultrasonic power: 160 W, heater capacity: 200 W, and maximum power supply capacity: 410 W). The method of applying an external vibration action with ultrasonic waves during the polymerization was as follows.

Intermittent ultrasonic irradiation (ultrasonic irradiation for 2 minutes every 15 minutes of polymerization) was performed from the start of dropwise addition of the solution up to the 4.5th hour of the polymerization. In this regard, the ultrasonic irradiation was not performed during the temperature lowering step up to 50°C after 4.5 hours and the continuous stirring for 1.5 hours.

After completion of the first polymerization step of 6.0 hours, sequentially, a solution including 7.2 g of divinylbenzene, 12.0 g of trimethylolpropane trimethacrylate, 4.8 g of di-trimethylolpropane tetraacrylate, 0.3 g of 2,2' -azobis-4-methoxy-2,4-dimethylvaleronitrile, and 83 g of mineral spirit was prepared, and the solution was all added by batch into the above mixture.

The second polymerization step was performed for 12 hours in total while keeping the temperature in the system at 50°C.

In this regard, the method of applying an external vibration action with ultrasonic waves during the second polymerization step of 12 hours after the batch addition of the solution was as follows.

Continuous ultrasonic irradiation was performed after the batch addition of the solution up to the 1st hour of the polymerization. Intermittent ultrasonic irradiation (ultrasonic irradiation for 5 minutes every 15 minutes of polymerization) was performed from the 1st hour of polymerization to the 12th hour of the polymerization.

Next, a solution including 0.3 g of bis-(4-t-butylcyclohexyl) peroxydicarbonate, and 10 g of mineral spirit was prepared at the point of time when the second polymerization step of 12 hours was completed, and the solution was all added by batch into the above mixture.

The third polymerization step was performed continuously for 1 hour while keeping the temperature in the system at 50°C.

When the amount of unreacted trimethylolpropane trimethacrylate in a filtrate sampled after completion of the polymerization was analyzed by gas chromatography, 99% or more of the added amount was reacted.

After completion of the polymerization, the resultant mixture was naturally cooled, and the slurry was filtered to obtain an aluminum pigment with an adherent resinous compound in a paste state.

The non-volatile content of this paste (in accordance with JIS-K-5910) was 35.2% by mass.

### [Example 2]

An aluminum pigment with an adherent resinous compound was obtained in a similar manner to Example 1 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Example 1. The non-volatile content of this paste in accordance with JIS-K-5910 was 35.9% by mass.

### [Example 3]

An aluminum pigment with an adherent resinous compound was obtained in a similar manner to Example 1 except that the components of the solution were changed to 9.0 g of divinylbenzene, 14.9 g of trimethylolpropane trimethacrylate, and 6.0 g of di-trimethylolpropane tetraacrylate sequentially after completion of the first polymerization step of 6.0 hours in Example 1. The non-volatile content of this paste in accordance with JIS-K-5910 was 35.0% by mass.

### [Example 4]

An aluminum pigment with an adherent resinous compound was obtained in a similar manner to Example 3 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Example 3. The non-volatile content of this paste in accordance with JIS-K-5910 was 35.5% by mass.

### [Example 5]

An aluminum pigment with an adherent resinous compound was obtained in a similar manner to Example 1 except that the components of the solution were changed to 9.5 g of divinylbenzene, 15.6 g of trimethylolpropane trimethacrylate, and 6.3 g of di-trimethylolpropane tetraacrylate sequentially after completion of the first polymerization step of 6.0 hours in Example 1. The non-volatile content of this paste in accordance with JIS-K-5910 was 35.1% by mass.

### [Example 6]

An aluminum pigment with an adherent resinous compound was obtained in a similar manner to Example 5 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Example 5. The non-volatile content of this paste in accordance with JIS-K-5910 was 35.3% by mass.

### [Example 7]

An aluminum pigment with an adherent resinous compound was obtained in a similar manner to Example 1 except that the components of the solution were changed to 15.6 g of divinylbenzene, 25.8 g of trimethylolpropane trimethacrylate, and 10.6 g of di-trimethylolpropane tetraacrylate sequentially after completion of the first polymerization step of 6.0 hours in Example 1. The non-volatile content of this paste in accordance with JIS-K-5910 was 34.9% by mass.

### [Example 8]

An aluminum pigment with an adherent resinous compound was obtained in a similar manner to Example 7 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Example 7. The non-volatile content of this paste in accordance with JIS-K-5910 was 34.8% by mass.

### [Example 9]

An aluminum pigment with an adherent resinous compound was obtained in a similar manner to Example 1 except that the components of the solution were changed to 17.1 g of divinylbenzene, 28.3 g of trimethylolpropane trimethacrylate, and 11.6 g of di-trimethylolpropane tetraacrylate sequentially after completion of the first polymerization step of 6.0 hours in Example 1. The non-volatile content of this paste in accordance with JIS-K-5910 was 34.5% by mass.

### [Example 10]

An aluminum pigment with an adherent resinous compound was obtained in a similar manner to Example 9 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Example 9. The non-volatile content of this paste in accordance with JIS-K-5910 was 34.6% by mass.

### [Example 11]

An aluminum pigment with an adherent resinous compound was obtained in a similar manner to Example 1 except that the components of the solution were changed to 19.6 g of divinylbenzene, 32.5 g of trimethylolpropane trimethacrylate, and 13.1 g of di-trimethylolpropane tetraacrylate sequentially after completion of the first polymerization step of 6.0 hours in Example 1. The non-volatile content of this paste in accordance with JIS-K-5910 was 34.4% by mass.

### [Example 12]

An aluminum pigment with an adherent resinous compound was obtained in a similar manner to Example 11 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Example 11. The non-volatile content of this paste in accordance with JIS-K-5910 was 34.6% by mass.

### [Comparative Example 1]

Physical properties were measured by combining the flaky aluminum powder paste FD-5060 in Example 1 with acrylic resin particles (having an average particle diameter of 20 µm, manufactured by Sekisui Plastics Co., Ltd.) to be used for the purpose of giving a matte effect.

### [Comparative Example 2]

An aluminum pigment with an adherent resinous compound was obtained in a similar manner to Example 1 except that the ultrasonic cleaner was not used during the polymerization step, and the external vibration action was not applied with ultrasonic waves during the polymerization in Example 1. The non-volatile content of this paste in accordance with JIS-K-5910 was 26.4% by mass.

### [Comparative Example 3]

An aluminum pigment with an adherent resinous compound was obtained in a similar manner to Example 1 except that the components of the solution were changed to 6.7 g of divinylbenzene, 11.3 g of trimethylolpropane trimethacrylate, and 4.5 g of di-trimethylolpropane tetraacrylate sequentially after completion of the first polymerization step of 6.0 hours in Example 1. The non-volatile content of this paste in accordance with JIS-K-5910 was 36.1% by mass.

### [Comparative Example 4]

An aluminum pigment with an adherent resinous compound was obtained in a similar manner to Comparative Example 3 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Comparative Example 3. The non-volatile content of this paste in accordance with JIS-K-5910 was 36.6% by mass.

### [Comparative Example 5]

An aluminum pigment with an adherent resinous compound was obtained in a similar manner to Example 1 except that the components of the solution were changed to 20.4 g of divinylbenzene, 34.0 g of trimethylolpropane trimethacrylate, and 13.7 g of di-trimethylolpropane tetraacrylate sequentially after completion of the first polymerization step of 6.0 hours in Example 1. The non-volatile content of this paste in accordance with JIS-K-5910 was 33.5% by mass.

### [Comparative Example 6]

An aluminum pigment with an adherent resinous compound was obtained in a similar manner to Comparative Example 5 except that the flaky aluminum powder paste was changed to 75.5 g of flaky aluminum powder paste CP-525 (manufactured by Asahi Kasei Corporation, average particle diameter: 25 µm, aspect ratio: 54, and non-volatile content: 79%) in Comparative Example 5. The non-volatile content of this paste in accordance with JIS-K-5910 was 33.8% by mass.

The evaluation results of Examples 1 to 12 and Comparative Examples 1 to 6 are shown in Table 1.

**[Table 1]**

| | Example 1 | Example 2 | Example 3 | Example 4 | Example 5 | Example 6 |
|---|---|---|---|---|---|---|
| Mass (g) of resinous compound / Unit mass (g) of aluminum pigment with adherent resinous compound = A | 0.35 | 0.35 | 0.39 | 0.39 | 0.40 | 0.40 |
| Average value of average surface roughness (Sa) | 25 | 43 | 35 | 49 | 50 | 74 |
| Average value of maximum surface-roughness height (Sz) | 200 | 339 | 280 | 393 | 400 | 587 |
| The number of indefinite polymers of resinous compound | Δ: 24 | Δ: 20 | ○: 30 | Δ: 24 | ○: 30 | ○:30 |
| Metallic-tone matte finish appearance | ○: 40.0 | ○: 38.6 | ○: 37.0 | ○: 35.4 | ⊚: 34.0 | ⊚: 32.3 |
| Alkali resistance | ○ | ○ | ○ | ○ | ○ | ○ |
| Amount of gas generation | ○ | ○ | ○ | ○ | ○ | ○ |

| | Example 7 | Example 8 | Example 9 | Example 10 | Example 11 | Example 12 |
|---|---|---|---|---|---|---|
| Mass (g) of resinous compound / Unit mass (g) of aluminum pigment with adherent resinous compound = A | 0.50 | 0.50 | 0.52 | 0.52 | 0.55 | 0.55 |
| Average value of average surface roughness (Sa) | 126 | 175 | 179 | 210 | 230 | 250 |
| Average value of maximum surface-roughness height (Sz) | 1002 | 1400 | 1466 | 1680 | 1819 | 2000 |
| The number of indefinite polymers of resinous compound | ○: 30 | ○: 30 | ○: 30 | ○: 30 | ○:30 | ○: 30 |
| Metallic-tone matte finish appearance | ⊚:28.5 | ⊚:23.0 | ○:19.3 | ○: 16.0 | ○: 11.6 | ○: 10.0 |
| Alkali resistance | ○ | ○ | ○ | ○ | ○ | ○ |
| Amount of gas generation | ○ | ○ | ○ | ○ | ○ | ○ |

| | Comparative Example 1 | Comparative Example 2 | Comparative Example 3 | Comparative Example 4 | Comparative Example 5 | Comparative Example 6 |
|---|---|---|---|---|---|---|
| Mass (g) of resinous compound / Unit mass (g) of aluminum pigment with adherent resinous compound = A | - | 0.35 | 0.34 | 0.34 | 0.56 | 0.56 |
| Average value of average surface roughness (Sa) | - | 283 | 14 | 24 | 252 | 265 |
| Average value of maximum surface-roughness height (Sz) | - | 2264 | 112 | 192 | 2016 | 2120 |
| The number of indefinite polymers of resinous compound | - | ○: 30 | ×: 8 | × : 14 | ○: 30 | ○: 30 |
| Metallic-tone matte finish appearance | ○: 33.2 | ×: 5.4 | ×: 46.6 | ×: 41.1 | ×: 9.1 | ×: 7.7 |
| Alkali resistance | × | × | ○ | ○ | ○ | ○ |
| Amount of gas generation | × | × | ○ | ○ | ○ | ○ |

From the above results, it has been confirmed that a coating material composition containing the aluminum pigment with an adherent resinous compound of the present invention has an excellent metallic-tone matte finish appearance and excellent alkali resistance without containing any matting agent at all that may be scraped off from a coated film due to, for example, an impact from the outside, and further, exhibits high water resistance even when used as a component of a water-based coating material composition. Accordingly, it has been found that the aluminum pigment with an adherent resinous compound of the present invention can form a coated film having a satisfactory metallic-tone matte finish appearance and excellent alkali resistance even without containing any matting agent at all that may be scraped off from the coated film due to, for example, an impact from the outside, and further, can exhibit high water resistance even when used for a water-based coating material.

In addition, from the comparison results of Examples 1 to 12 and Comparative Examples 1 to 6, it has been also found that according to the coating material composition of the present invention, a metallic-tone matte finish appearance equivalent to or more than that of an aluminum-containing coating material composition using a matting agent as in conventional cases can be obtained without containing any matting agent, and from the results of Examples 5 to 8, when a mass ratio (A(g/g)) of the resinous compound per unit mass of the aluminum pigment with an adherent resinous compound is in the range of 0.40 or more to 0.50 or less, the number of indefinite polymers of resinous compound is also favorable, and an excellent metallic-tone matte finish appearance can be provided more stably.

In this regard, although not shown in the table, it has been confirmed that the ink composition containing the aluminum pigment with an adherent resinous compound of the present invention can also prepare a printed matter having a satisfactory metallic-tone matte finish appearance and excellent alkali resistance without containing any matting agent at all, and further, can also exhibit high water resistance even when used for a water-based ink. As a result, it has been found that the aluminum pigment with an adherent resinous compound of the present invention can prepare a printed matter having a satisfactory metallic-tone matte finish appearance and excellent alkali resistance even without containing any matting agent at all, and further, can exhibit high water resistance even when used for a water-based ink.

### INDUSTRIAL APPLICABILITY

The aluminum pigment with an adherent resinous compound of the present invention has industrial applicability as a coating material used in the automobile industry (including motorcycles), the aircraft industry, and the household appliance industry, or the like, for example, as a coating material for various kinds of components for automobile and aircraft, or various kinds of components for information household appliances typified by general household electric appliances or mobile phones; or as an ink used in the printing industry or the like, for example, as an ink for printing. Specifically, the aluminum pigment with an adherent resinous compound of the present invention has industrial applicability as a coating material used for a substrate made of a metal such as iron or a magnesium alloy, plastic, or the like, and for application of ink.

## Claims

1. An aluminum pigment with an adherent resinous compound, comprising:
a flaky aluminum powder; and
a resinous compound adherent to a surface of the flaky aluminum powder, wherein
the resinous compound is a polymer of a radical-polymerizable monomer and/or a radical-polymerizable oligomer each having one or more double bonds in a molecule,
the resinous compound contains a polymerization initiator being not fixed onto the surface of the flaky aluminum powder and being a peroxide or an azo compound, and
a mass ratio of the resinous compound per unit mass of the aluminum pigment with an adherent resinous compound is 0.35 or more to 0.55 or less.

2. An aluminum pigment with an adherent resinous compound according to claim 1, wherein
an average value of average surface roughness (Sa) of aluminum particles constituting the aluminum pigment with an adherent resinous compound is 25 nm or more to 250 nm or less.

3. The aluminum pigment with an adherent resinous compound according to claim 2, wherein an average value of maximum surface-roughness height (Sz) of aluminum particles constituting the aluminum pigment with an adherent resinous compound is 200 nm or more to 2000 nm or less.

4. The aluminum pigment with an adherent resinous compound according to any one of claims 1 to 3, wherein at least three resinous compounds, each of which is adherent to the outermost surface of the aluminum pigment with an adherent resinous compound and has a portion protruding from a circle with a radius of 0.2 µm, are present per 48 µm² of the outermost surface area of the aluminum pigment with an adherent resinous compound.

5. A coating material composition not containing any matting agent, comprising the aluminum pigment with an adherent resinous compound according to any one of claims 1 to 4.

6. The coating material composition according to claim 5, wherein a mass ratio of solid content of the aluminum pigment with an adherent resinous compound to 100 parts of solid content of the coating material composition is 5% or more to 40% or less.

7. The coating material composition according to claim 5 or 6, wherein a coated film obtained by applying the coating material composition onto art paper shows a gloss of 10.0 or more to less than 40.5 as a 60-degree specular reflectivity when an incident angle and a light-receiving angle are 60 degrees, respectively.

8. The coating material composition according to any one of claims 5 to 7, further comprising a black pigment.

9. The coating material composition according to claim 8, wherein a coated plate obtained by applying the coating material composition onto an acrylic resin plate shows alkali resistance with a color difference ΔE of less than 1.0, the alkali resistance being evaluated by a method of expressing the alkali resistance by the color difference ΔE between an immersed portion and an unimmersed portion when the coated plate is immersed in a 5 N sodium hydroxide solution at 55°C for 4 hours.

10. An aqueous coating material composition not containing any matting agent, comprising the aluminum pigment with an adherent resinous compound according to any one of claims 1 to 4, wherein an amount of gas generation is 3 ml or less when the aqueous coating material composition is kept at 40°C for 72 hours.

11. A coated film, comprising the coating material composition according to any one of claims 5 to 10.

12. An ink composition not containing any matting agent, comprising the aluminum pigment with an adherent resinous compound according to any one of claims 1 to 4.

13. A printed matter, comprising the ink composition according to claim 12.

14. A method for producing the aluminum pigment with an adherent resinous compound according to any one of claims 1 to 4, comprising:
preparing a dispersion liquid by adding, into an organic solvent, a flaky aluminum powder, and a resinous composition of a polymer of a radical-polymerizable monomer and/or a radical-polymerizable oligomer each having one or more double bonds in a molecule, the dispersion liquid having a concentration of the aluminum powder of 0.1% by weight or more to 40% by mass or less and a concentration of the resinous composition of 0.06% by weight or more to 27% by mass or less; and
applying an external vibration action to the dispersion liquid during adhesion treatment of the resinous composition to the aluminum powder.

## Patentansprüche

1. Aluminiumpigment mit anhaftender Harzverbindung, umfassend:
ein blättchenförmiges Aluminiumpulver; und
eine Harzverbindung, die an einer Oberfläche des blättchenförmigen Aluminiumpulvers haftet, wobei
die Harzverbindung ein Polymer eines radikalisch polymerisierbaren Monomers und/oder eines radikalisch polymerisierbaren Oligomers ist, die jeweils eine oder mehrere Doppelbindungen in einem Molekül aufweisen,
die Harzverbindung einen Polymerisationsinitiator enthält, der nicht an der Oberfläche des blättchenförmigen Aluminiumpulvers fixiert ist und ein Peroxid oder eine Azoverbindung ist, und
ein Massenverhältnis der Harzverbindung pro Einheitsmasse des Aluminiumpigments mit anhaftender Harzverbindung 0,35 oder mehr bis 0,55 oder weniger ist.

2. Aluminiumpigment mit anhaftender Harzverbindung nach Anspruch 1, wobei
ein Durchschnittswert der mittleren Oberflächenrauigkeit (Sa) von Aluminiumteilchen, aus denen das Aluminiumpigment mit anhaftender Harzverbindung gebildet ist, 25 nm oder mehr bis 250 nm oder weniger beträgt.

3. Aluminiumpigment mit anhaftender Harzverbindung nach Anspruch 2, wobei ein Durchschnittswert der maximalen Oberflächenrauigkeitshöhe (Sz) von Aluminiumteilchen, aus denen das Aluminiumpigment mit anhaftender Harzverbindung gebildet ist, 200 nm oder mehr bis 2000 nm oder weniger beträgt.

4. Aluminiumpigment mit anhaftender Harzverbindung nach einem der Ansprüche 1 bis 3, wobei mindestens drei Harzverbindungen, von denen jede an der äußersten Oberfläche des Aluminiumpigments mit anhaftender Harzverbindung anhaftet und einen von einem Kreis mit einem Radius von 0,2 µm vorstehenden Abschnitt aufweist, pro 48 µm² des äußersten Oberflächenbereich des Aluminiumpigments mit anhaftender Harzverbindung vorhanden sind.

5. Beschichtungsmaterialzusammensetzung, die kein Mattierungsmittel enthält, umfassend das Aluminiumpigment mit anhaftender Harzverbindung nach einem der Ansprüche 1 bis 4.

6. Beschichtungsmaterialzusammensetzung nach Anspruch 5, wobei ein Massenanteil des Feststoffgehalts des Aluminiumpigments mit anhaftender Harzverbindung zu 100 Teilen Feststoffgehalt der Beschichtungsmaterialzusammensetzung 5% oder mehr bis 40% oder weniger beträgt.

7. Beschichtungsmaterialzusammensetzung nach Anspruch 5 oder 6, wobei ein durch Auftragen der Beschichtungsmaterialzusammensetzung auf Kunstdruckpapier erhaltener Beschichtungsfilm einen Glanz von 10,0 oder mehr bis weniger als 40,5 als 60-Grad-Spiegelreflexionsvermögen zeigt, wenn ein Einfallswinkel und ein Lichtempfangswinkel jeweils 60 Grad sind.

8. Beschichtungsmaterialzusammensetzung nach einem der Ansprüche 5 bis 7, welche weiterhin ein schwarzes Pigment enthält.

9. Beschichtungsmaterialzusammensetzung nach Anspruch 8, wobei eine durch Auftragen der Beschichtungsmaterialzusammensetzung auf eine Acrylharzplatte erhaltene beschichtete Platte eine Alkalibeständigkeit mit einer Farbdifferenz ΔE von weniger als 1,0 zeigt, wobei die Alkalibeständigkeit durch ein Verfahren bewertet wird, das die Alkalibeständigkeit durch die Farbdifferenz ΔE zwischen einem eingetauchten Abschnitt und einem nicht eingetauchten Abschnitt ausdrückt, wenn die beschichtete Platte für 4 Stunden bei 55°C in eine 5 N Natriumhydroxidlösung eingetaucht wird.

10. Wässrige Beschichtungsmaterialzusammensetzung, die kein Mattierungsmittel enthält, umfassend das Aluminiumpigment mit anhaftender Harzverbindung nach einem der Ansprüche 1 bis 4, wobei eine Gasbildungsmenge 3 ml oder weniger beträgt, wenn die wässrige Beschichtungsmaterialzusammensetzung für 72 Stunden bei 40°C gehalten wird.

11. Beschichtungsfilm, umfassend die Beschichtungsmaterialzusammensetzung nach einem der Ansprüche 5 bis 10.

12. Tinten- bzw. Druckfarbenzusammensetzung, die kein Mattierungsmittel enthält, umfassend das Aluminiumpigment mit anhaftender Harzverbindung nach einem der Ansprüche 1 bis 4.

13. Druckerzeugnis, umfassend die Tintenzusammensetzung nach Anspruch 12.

14. Verfahren zur Herstellung des Aluminiumpigments mit anhaftender Harzverbindung nach einem der Ansprüche 1 bis 4, umfassend:
Herstellen einer Dispersionsflüssigkeit durch Zugabe, in ein organisches Lösungsmittel, eines blättchenförmigen Aluminiumpulvers und einer Harzzusammensetzung eines Polymers eines radikalisch polymerisierbaren Monomers und/oder eines radikalisch polymerisierbaren Oligomers, die jeweils eine oder mehrere Doppelbindungen in einem Molekül aufweisen, wobei die Dispersionsflüssigkeit eine Konzentration des Aluminiumpulvers von 0,1 Gew.-% oder mehr bis 40 Gew.-% oder weniger und eine Konzentration der Harzzusammensetzung von 0,06 Gew.-% oder mehr bis 27 Gew.-% oder weniger aufweist; und
Ausüben einer äußeren Schwingungseinwirkung auf die Dispersionsflüssigkeit während einer Behandlung zur Anhaftung der Harzzusammensetzung an das Aluminiumpulver.

## Revendications

1. Pigment d'aluminium avec un composé résineux adhérent, comprenant :
une poudre d'aluminium floconneuse; et
un composé résineux adhérant à une surface de poudre d'aluminium floconneuse, dans lequel
le composé résineux est un polymère d'un monomère polymérisable par voie radicalaire et/ou d'un oligomère polymérisable par voie radicalaire, chacun ayant une ou plusieurs doubles liaisons dans une molécule.
le composé résineux contient un initiateur de polymérisation qui n'est pas fixé à la surface de la poudre d'aluminium floconneuse et qui est un peroxyde ou un composé azoïque, et
le rapport massique du composé résineux par unité de masse du pigment d'aluminium avec un composé résineux adhérent est de 0,35 ou plus à 0,55 ou moins.

2. Pigment d'aluminium avec un composé résineux adhérent selon la revendication 1, dans lequel :
une valeur moyenne de rugosité de surface moyenne (Sa) des particules d'aluminium constituant le pigment d'aluminium avec un composé résineux adhérent est de 25 nm ou plus à 250 nm ou moins.

3. Pigment d'aluminium avec un composé résineux adhérent selon la revendication 2 , dans lequel une valeur moyenne de la hauteur de rugosité de surface maximale (Sz) des particules d'aluminium constituant le pigment d'aluminium avec un composé résineux adhérent est de 200 nm ou plus à 2000 nm ou moins.

4. Pigment d'aluminium avec un composé résineux adhérent selon l'une quelconque des revendications 1 à 3, dans lequel au moins trois composés résineux, chacun adhérant à la surface externe du pigment d'aluminium avec un composé résineux adhérent et présentant une portion faisant saillie d'un cercle de rayon 0,2 µm, sont présents par 48 µm² de la surface la plus externe du pigment d'aluminium avec un composé résineux adhérent.

5. Composition de matériau de revêtement ne contenant aucun agent matifiant, comprenant le pigment d'aluminium avec un composé résineux adhérent selon l'une quelconque des revendications 1 à 4.

6. Composition du matériau de revêtement selon la revendication 5, dans laquelle le rapport massique de la teneur en matière solide du pigment d'aluminium avec un composé résineux adhérent à 100 parties de la teneur en matière solide de la composition du matériau de revêtement est de 5 % ou plus à 40 % ou moins.

7. Composition de matériau de revêtement selon la revendication 5 ou 6, dans laquelle un film enduit obtenu en appliquant la composition de matériau de revêtement sur du papier d'art présente une brillance de 10,0 ou plus à moins de 40,5 en tant que réflectivité spéculaire de 60 degrés lorsque l'angle d'incidence et l'angle de réception de la lumière sont respectivement de 60 degrés.

8. Composition du matériau de revêtement selon l'une quelconque des revendications 5 à 7, comprenant en outre un pigment noir.

9. Composition de matériau de revêtement selon la revendication 8, dans laquelle une plaque revêtue obtenue en appliquant la composition de matériau de revêtement sur une plaque de résine acrylique présente une résistance aux alcalis avec une différence de couleur ΔE inférieure à 1,0, la résistance aux alcalis étant évaluée par une méthode exprimant la résistance aux alcalis par la différence de couleur ΔE entre une partie immergée et une partie non immergée lorsque la plaque revêtue est immergée dans une solution d'hydroxyde de sodium 5 N à 55 °C pendant 4 heures.

10. Composition de matériau de revêtement aqueux ne contenant aucun agent matifiant, comprenant le pigment d'aluminium avec un composé résineux adhérent selon l'une quelconque des revendications 1 à 4, dans laquelle la quantité de génération de gaz est de 3 ml ou moins lorsque la composition de matériau de revêtement aqueux est maintenue à 40 °C pendant 72 heures.

11. Film enduit, comprenant la composition du matériau de revêtement selon l'une quelconque des revendications 5 à 10.

12. Composition d'encre ne contenant aucun agent matifiant, comprenant le pigment d'aluminium avec un composé résineux adhérent selon l'une quelconque des revendications 1 à 4.

13. Imprimé comprenant la composition d'encre selon la revendication 12.

14. Procédé de production d'un pigment d'aluminium avec un composé résineux adhérent selon l'une quelconque des revendications 1 à 4, comprenant :
la préparation d'un liquide de dispersion par ajout, dans un solvant organique, d'une poudre d'aluminium floconneuse et d'une composition résineuse d'un polymère d'un monomère polymérisable par voie radicalaire et/ou d'un oligomère polymérisable par voie radicalaire, chacun ayant une ou plusieurs doubles liaisons dans une molécule, le liquide de dispersion ayant une concentration en poudre d'aluminium de 0,1 % en poids ou plus à 40 % en masse ou moins et une concentration en composition résineuse de 0,06 % en poids ou plus à 27 % en masse ou moins ; et
l'application d'une action de vibration externe au liquide de dispersion pendant le traitement d'adhérence de la composition résineuse à la poudre d'aluminium.
